# DEMANDE DE BREVET EUROPEEN

(11) **EP 3 783 532 A1**
(43) Date de publication de la demande: **24.02.2021**
(21) Numéro de dépôt: 20191832.3
(22) Date de dépôt: 19.08.2020
(51) Int. Cl.: G06K 9/00

(54) **DISPOSITIF DE DETECTION DE PERSONNES EN SITUATION DE NOYADE OU DE SITUATION A RISQUE DE NOYADE**

(30) Priorité: 23.08.2019 FR 1909386
(71) Demandeur: Atos Integration, 95870 Bezons (FR)
(72) Inventeur: NEMO, Clémentine, 06650 Opio (FR); LUTZ, Nicolas, 06150 Cannes (FR); RICHTER, Gérard, 06640 St Jeannet (FR); LEBRETON, Nicolas, 06250 Mougins (FR)
(74) Mandataire: Debay, Damien

(57) **Abrégé**

La présente invention concerne un dispositif (2) de détection de personnes en situation de noyade ou de situation à risque de noyade, comprenant au moins un programme de codes exécutables sur un ou plusieurs composants hardware de traitement tels qu'un microprocesseur, le programme étant mémorisé dans au moins un média lisible et implémentant un réseau neuronal artificiel (20) présentant une architecture d'apprentissage automatique composée de plusieurs couches, le réseau neuronal artificiel (20) étant pré-entrainé sur des données d'images d'au moins une base de données standard non spécifique, le programme étant caractérisé en ce que le réseau neuronal est en outre entrainé une seconde fois par transfert d'apprentissage sur des données d'images de vidéos de situations de noyade ou à risque de noyade, simulées ou réelles, le programme entrainé étant configuré par ce transfert d'apprentissage pour repérer, de préférence en temps réel, des situations de noyade ou à risque de noyade à partir de nouvelles données images fournies.

## Description

### DOMAINE TECHNIQUE DE L'INVENTION

La présente invention concerne de manière générale le domaine des dispositifs de détection de personnes en situation de noyade ou de situation à risque de noyade, notamment les dispositifs incorporant une caméra pour détecter lesdits risques de noyade.

### ETAT DE LA TECHNIQUE ANTERIEURE

Plusieurs dispositifs existent actuellement pour la détection de personnes qui coulent dans un bassin.

La demande de brevet EP3408841 A1 concerne un dispositif fixé et immergé dans une piscine, le dispositif comprenant une caméra sous l'eau pour détecter des nageurs en situation de détresse qui coulent au fond de l'eau. Les données vidéo sont analysées par une IA simple utilisant un algorithme d'apprentissage par machine (machine learning) afin de réduire le nombre de fausses alertes, par exemple lorsqu'un nageur fait de l'apnée au fond de la piscine. En cas de détection d'une situation de noyade, une alerte est envoyée à un receveur. Ces alertes peuvent être une alarme sonore présent sur le dispositif fixé à la piscine, ou sur une unité d'alarme à distance. Ce type de dispositif ne peut cependant être utilisé qu'immergé, dans une piscine, pour repérer un nageur ayant coulé.

La demande de brevet CN108010273 divulgue un dispositif portatif (par le nageur) capable de détecter la noyade par la mesure de différents facteurs à savoir des données de mouvements, de rythme cardiaque et de localisation. La détection repose sur l'analyse des données récupérées et analysée par une IA dans un serveur cloud. Ce type de dispositif permet une surveillance individuelle de l'utilisateur, mais n'est pas adéquat pour une surveillance d'une zone plutôt que d'une personne précise.

La demande de brevet CN206491410 divulgue un bracelet de type montre porté par le nageur pour la détection de noyade. Le bracelet intègre un module de mesure de la pression de l'eau, un GPS, un suivi du rythme cardiaque, affiche une carte avec un point particulier. Ce document réduit l'analyse des données à un dépassement de seuil d'une donnée, ici la pression de l'eau, ce qui peut provoquer un grand nombre de faux positifs. A nouveau, ce type de dispositif permet une surveillance individuelle de l'utilisateur, mais n'est pas adéquat pour une surveillance d'une zone plutôt que d'une personne précise.

Il en résulte un besoin de mieux repérer les situations à risques de noyade, en termes de rapidité et d'efficacité de la détection. Il est nécessaire de repérer et d'alerter vite suite à une noyade, si possible sans attendre que le nageur ait perdu connaissance et coule. Les dispositifs connus ont tous une zone de surveillance très restreinte et spécifique (le fond d'un bassin, voire une partie du fond d'un bassin en fonction de l'opacité de l'eau) voire présente même une surveillance individuelle. Aussi, chaque document propose de détecter une personne une fois qu'elle s'est noyée, entre autres par la détection d'un nageur qui touche le fond du bassin. Il n'existe ainsi aucun dispositif pour réaliser une surveillance ailleurs qu'en piscine, par exemple en bord de mer, où les dispositifs précédemment décrits ne peuvent pas fonctionner, ou fonctionnement de manière inefficace et inadéquate.

### EXPOSE DE L'INVENTION

La présente invention a donc pour objet de proposer un dispositif de détection de personnes en situation de noyade ou de situation à risque de noyade, permettant de palier au moins une partie des inconvénients de l'art antérieur.

Ce but est atteint par un dispositif de détection de personnes en situation de noyade ou de situation à risque de noyade, comprenant au moins un programme de codes exécutables sur un ou plusieurs composants hardware de traitement tels qu'un microprocesseur, le programme étant mémorisé dans au moins un média lisible et implémentant un réseau neuronal artificiel présentant une architecture d'apprentissage automatique composée de plusieurs couches, le réseau neuronal artificiel étant pré-entrainé sur des données d'images d'au moins une base de données standard non spécifique, le réseau neuronal du programme étant en outre entrainé une seconde fois par transfert d'apprentissage sur des données d'images de vidéos de situations de noyade ou à risque de noyade, simulées ou réelles, le programme entrainé étant configuré par ce transfert d'apprentissage pour repérer sur de nouvelles données images fournies, de préférence en temps réel, des situations de noyade ou à risque de noyade .

Selon une particularité, le dispositif **de détection** de personnes en situation de noyade ou de situation à risque de noyade, comprenant au moins un programme de codes exécutables sur un ou plusieurs composants hardware de traitement tels qu'un microprocesseur, le programme étant mémorisé dans au moins un média lisible et implémentant un réseau neuronal artificiel présentant une architecture d'apprentissage automatique composée de plusieurs couches, le réseau neuronal artificiel comprenant :
- Une première couche comprenant un modèle de réseau, préférentiellement de type réseau de neurones convolutifs, CNN, pré-entrainé sur des données d'images d'une base de données d'images standard, par exemple publique, les données d'image étant annotées et classées,
- Une deuxième couche comprenant un réseau récurrent, préférentiellement de type réseau récurrent à mémoire court et long terme, LSTM, pré-entrainé sur des séquences vidéo d'une base de données vidéos standard, les séquences vidéo étant annotées et classées,
- Une troisième couche comprenant un classificateur final entrainé sur des séquences vidéo d'une base de données spécifique de vidéos comportant des situations de noyade ou à risque de noyade, simulées ou réelles, les séquence vidéo étant annotées et classées, le classificateur étant configuré pour fournir en résultat une probabilité de détection d'une situation à risque à partir de séquences vidéo,
   Le programme étant configuré pour utiliser les probabilités de détection pour repérer dans des séquences vidéo d'un flux vidéo fourni, de préférence par des capteurs, notamment une caméra, et préférentiellement en temps réel, des situations de noyade ou à risque de noyade.

Selon une autre particularité, les valeurs de sortie de la première couche sont composées de vecteur de représentation latente des images et sont combinées pour former des séquences de vecteurs de représentation latente comme valeurs d'entrée de la deuxième couche.

Selon une autre particularité, les sorties de la deuxième couche forment un vecteur de représentation de la séquence vidéo, fourni en entrée de la troisième couche.

Selon une autre particularité, le dispositif comprend en outre un module de notification apte à envoyer un message d'alerte à un dispositif récepteur d'information.

Selon une autre particularité, le programme, lors de la détection d'une situation de noyade ou à risque de noyade, exécute un code permettant de calculer et indiquer la localisation, par exemple la localisation GPS, de la situation détectée.

Selon une autre particularité, le programme est en outre configuré pour traiter l'image ou le flux d'image reçu pour produire une image augmentée ou un flux d'images augmentées, affichant par exemple une zone contenant la situation à risque.

Selon une autre particularité, le dispositif comprend en outre une base de données de séquences vidéo sur laquelle sont conservées les situations à risques détectées, le classificateur pouvant être entrainé par lesdites situations détectées.

Selon une autre particularité, le dispositif peut communiquer avec un autre dispositif de détection semblable pour mettre en commun les situations à risques détectées et conservées dans leur base de données de séquences vidéo afin d'améliorer leur classificateur.

L'invention concerne aussi un système, **de surveillance et de détection** de personnes en situation à risque de noyade ou de situation à risque de noyade, la détection étant réalisée par le dispositif selon l'une quelconque des revendications précédentes, ledit système comprenant en outre :
- au moins un capteur d'image, préférentiellement un capteur de données d'images et de séquences vidéo d'un flux vidéo, le capteur étant configuré pour fournir des séquences vidéo au programme du dispositif de détection,
- Au moins un dispositif récepteur d'information configuré pour informer un utilisateur de la détection d'une situation de noyade ou à risque de noyade, le dispositif de détection étant configuré pour envoyer un message par un module de notification au dispositif d'information lorsqu'une des séquences vidéo fournies par le capteur d'image est considérée correspondante à une situation de noyade ou à risque de noyade de sa base de données.

Selon une autre particularité, le capteur d'image est monté sur un pylône relié audit dispositif de détection.

Selon une autre particularité, le dispositif récepteur d'information est configuré pour afficher des informations de localisation et/ou une image augmentée de la situation à risque.

Selon une autre particularité, le dispositif récepteur d'information comprend une montre connectée exécutant une application configurée pour afficher les informations reçues par ledit dispositif d'information, ainsi qu'une alerte sonore et/ou vibrante

L'invention concerne aussi un procédé d'entrainement par transfert d'apprentissage d'un programme d'apprentissage automatique configuré pour la détection de personnes en situation de noyade ou de situation à risque de noyade, le programme étant mémorisé dans au moins un média lisible et comprenant un réseau neuronal artificiel présentant une architecture d'apprentissage automatique composée de plusieurs couches, le procédé comprenant au moins les étapes suivantes :
- Entrainement non spécifique du réseau neuronal artificiel par la fourniture de données d'images d'une base de données d'images et de séquences vidéo standard, dans laquelle les données d'images et les séquences vidéo sont préalablement annotées et classées, puis
- Entrainement spécialisé du réseau neuronal artificiel par la fourniture de séquences vidéo de vidéos de situations de noyade ou à risque de noyade, simulées ou réelles

Selon une autre particularité, le procédé d'entrainement comprend au moins les étapes suivantes :
- Entrainement d'une première couche du programme comprenant un modèle de réseau, préférentiellement de type réseau de neurones convolutifs, CNN, par la fourniture de données d'images d'une base de données d'images standard, par exemple publique, dans laquelle les données d'image sont préalablement annotées et classées,
- Entrainement d'une deuxième couche du programme comprenant un réseau récurrent, préférentiellement de type réseau récurrent à mémoire court et long terme, LSTM, par la fourniture de séquences vidéo d'une banque de données vidéos standard, préférentiellement publique, dans laquelle les séquences vidéo sont préalablement annotées et classées,
- Entrainement d'une troisième couche du programme comprenant un classificateur final par la fourniture de données séquences vidéo de situations de noyade ou à risque de noyade, simulées ou réelles, les données vidéos ayant été choisies spécifiquement et annotés comme situations à risque de noyade, le classificateur ainsi entrainé étant configuré pour fournir en résultat une probabilité de détection d'une situation à risque à partir de séquences vidéo.

L'invention concerne aussi un procédé de détection et de surveillance de personnes en situation de noyade ou à risque de noyade, comprenant au moins un capteur d'images, un dispositif de détection comprenant un programme de codes exécutables sur un ou plusieurs composants hardware de traitement tels qu'un microprocesseur, le programme étant mémorisé dans au moins un média lisible et comprenant un réseau neuronal artificiel présentant une architecture d'apprentissage automatique, et un dispositif d'information d'un utilisateur, le procédé comprenant au moins les étapes suivantes :
- Pré-entrainement dudit programme par un procédé selon la revendication précédente,
- Fourniture de séquences vidéo par un capteur d'image au dispositif de détection comprenant
- Analyse en temps réel desdites séquences vidéo par ledit réseau neuronal artificiel, et fourniture d'une probabilité de détection d'une situation à risque,
- Détection d'une situation à risque, lorsque ladite probabilité de détection est supérieure à une valeur préalablement déterminée.
- Envoi par le programme d'une notification comprenant des informations sur la situation à risque au dispositif d'information, préférentiellement porté par l'utilisateur.

Selon une autre particularité, le procédé de détection et de surveillance comprend en outre une étape de localisation de la situation à risque par le programme lorsque celui-ci détecte ladite situation à risque.

Selon une autre particularité, le procédé de détection et de surveillance comprend une étape d'enregistrement des séquences vidéo de la situation à risques détectée dans la base de données du dispositif, le procédé comprenant en outre une étape d'apprentissage automatique dans laquelle le réseau neuronal artificiel s'entraine sur les nouvelles séquences vidéo enregistrées afin d'améliorer la détection de situations à risque.

### BREVE DESCRIPTION DES FIGURES

D'autres caractéristiques, détails et avantages de l'invention ressortiront à la lecture de la description qui suit en référence aux figures annexées, qui illustre :
- [Fig. 1] la figure 1 représente le dispositif selon certains modes de réalisation.
- [Fig. 2] la figure 2 représente le procédé d'entrainement réalisé sur l'architecture d'apprentissage automatique du réseau neuronal artificiel.

### DESCRIPTION DETAILLEE DE L'INVENTION

**De** nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

**De** manière générale, la présente invention comporte un dispositif (2) détection de personnes en situation de noyade ou de situation à risque de noyade, comprenant au moins un programme de codes exécutables sur un ou plusieurs composants hardware de traitement tels qu'un microprocesseur, le programme étant mémorisé dans au moins un média lisible et implémentant un réseau neuronal artificiel (20) présentant une architecture d'apprentissage automatique composée de plusieurs couches, le réseau neuronal artificiel (20) étant pré-entrainé sur des données d'images d'au moins une base de données standard non spécifique, le réseau neuronal du programme étant en outre entrainé une seconde fois par transfert d'apprentissage sur des données d'images de vidéos de situations de noyade ou à risque de noyade, simulées ou réelles, le programme entrainé étant configuré par ce transfert d'apprentissage pour repérer sur de nouvelles données images fournies, de préférence en temps réel, des situations de noyade ou à risque de noyade.

On comprend que par « séquences vidéo », on entend des données d'image successives prise par la ou les caméras. Une séquence vidéo peut par exemple et de façon non limitative consister en une suite d'images successives pendant une durée de 5 secondes.

On comprend que par base de données « standard », on entend une base de données qui comprend des données d'images et/ou des séquences vidéo représentant des actions variées, par opposition à une base de données spécifique, qui contiendrait exclusivement des séquences vidéo de situations de noyade, réelles ou simulées.

Dans certains modes de réalisation, le dispositif (2) de détection de personnes en situation de noyade ou de situation à risque de noyade, comprend au moins un programme de codes exécutables sur un ou plusieurs composants hardware de traitement tels qu'un microprocesseur, le programme étant mémorisé dans au moins un média lisible et implémentant un réseau neuronal artificiel (20) présentant une architecture d'apprentissage automatique composée de plusieurs couches, le réseau neuronal artificiel (20) comprenant :
- Une première couche (210) comprenant un modèle de réseau, préférentiellement de type réseau de neurones convolutifs, CNN, pré-entrainé sur des données d'images d'une base de données d'images standard, et préférentiellement publique, les données d'images étant annotées et classées,
- Une deuxième couche (220) comprenant un réseau récurrent, préférentiellement de type réseau récurrent à mémoire court et long terme, LSTM, pré-entrainé sur des séquences vidéo d'une base de données vidéos standard, les séquences vidéo étant annotées et classées,
- Une troisième couche (230) comprenant un classificateur final entrainé sur des séquences vidéo d'une base de données spécifique de vidéos comportant des situations de noyade ou à risque de noyade, simulées ou réelles, les séquences vidéo étant annotées et classées, le classificateur étant configuré pour fournir en résultat une probabilité de détection d'une situation à risque à partir de séquences vidéo,
   Le programme étant configuré pour utiliser les probabilités pour repérer dans des séquences vidéo d'un flux vidéo fourni, de préférence par des capteurs, notamment une caméra, et préférentiellement en temps réel, des situations de noyade ou à risque de noyade.

Par rapport aux documents de l'art antérieur dans des piscines, le dispositif (2) de la présente demande est configuré pour surveiller des situations à risque de noyade, ou précédant la noyade, lorsque le nageur n'a pas encore coulé.

Ainsi, en d'autres termes, le réseau neuronal comprend différentes couches avec des fonctions précises. Le CNN va détecter des formes dans les images, le LSTM va analyser des successions de formes et détecter un ensemble de modifications représentatifs de l'image, et le classificateur va analyser ces modifications représentatives et assigner une probabilité de situation de noyade. Tout ceci est entrainé par un algorithme dit supervisé, c'est-à-dire que l'apprentissage se fait à partir de données, ici de données d'images (211) et de séquences vidéo en entrée dont on sait si ladite donnée fournie en entrée est liée à une situation de noyade ou non. Ladite donnée est en effet classée et annotées de façon a apprendre au réseau de neurones à repérer des formes et des motifs, par des vecteurs de représentation latente, au sein d'images et de séquences vidéo.

Avantageusement, l'utilisation de ces vidéos très spécifiques pour entrainer la troisième couche (230), permet d'obtenir un réseau neuronal spécialisé dans la détection de situation à risque de noyade par spécialisation du classificateur final, à l'aide d'un faible nombre de vidéos très pertinentes. Cela permet de réduire grandement le besoin en vidéos annotés manuellement par transfert d'apprentissage, en utilisant un petit nombre de vidéos spécifiques pour spécialiser un réseau neuronal artificiel (20) pré-entrainé sur un grand nombre de données d'images et vidéos non spécifiques. Une fois le réseau neuronal artificiel (20) entrainé, les algorithmes sont pondérés de façon à ce que ledit réseau neuronal puisse calculer une probabilité de détection (232) à chaque séquence vidéo fournie en entrée. Il ne s'agit donc pas d'une comparaison de séquences vidéo mais bien de l'utilisation d'algorithmes optimisés que représentent les différentes couches du réseau neuronal artificiel (20).

Le flux vidéo fourni en entrée, par exemple par une caméra, est décomposé en séquences vidéo que l'algorithme, une fois entrainé, va traiter et auxquelles il va assigner une probabilité de détection (232), par exemple 79% de probabilité d'une détection d'une situation de noyade sur une séquence vidéo donnée.

Par Convolutional Neural Networks, ou CNN, en français «réseau de neurones convolutifs » ou « réseau de neurones à convolution » on entend un réseau neuronal convolutif composé de deux types de neurones artificiels, agencés en « couches » ou sous-couches traitant successivement l'information : les neurones de traitement, qui traitent une portion limitée de l'image (appelée « champ réceptif ») au travers d'une fonction de convolution, et les neurones de mise en commun des sorties dits de pooling (totale ou partielle). Un traitement correctif non-linéaire et ponctuel peut être appliqué entre chaque couche pour améliorer la pertinence du résultat.

L'ensemble des sorties d'une couche de traitement permet de reconstituer une image intermédiaire, qui servira de base à la couche suivante.

Par Long Short-Term Memory, ou LSTM, en français « réseau récurrent à mémoire court et long terme ». Un réseau récurrent est un réseau de neurones artificiels présentant des connexions récurrentes. Ces réseaux travaillent sur des séquences d'entrées. La sortie de chaque neurone est une combinaison non linéaire de l'entrée et de la sortie à l'instant précédent.

Les différentes couches de neurones peuvent être des modèles de réseaux existants, ou créés spécifiquement pour cette utilisation, pour des raisons de performance.

Les réseaux de neurones récurrents sont adaptés pour des séquence de données d'entrée de taille variable. Ils conviennent en particulier pour l'analyse de séries temporelles. Ils sont typiquement utilisés pour l'analyse du langage (séquence de mots) ou pour l'analyse de vidéo (séquence d'images).

Le réseau neuronal artificiel (20) est entrainé par un algorithme d'apprentissage supervisé.

Dans certains modes de réalisation, les valeurs de sortie de la première couche (210) sont composées de vecteur de représentation latente (212) des données d'images (211) et sont combinées pour former des séquences de vecteurs de représentation latente (221) comme valeurs d'entrée de la deuxième couche (220). Dans certains modes de réalisation, les sorties de la deuxième couche (220) forment un vecteur de représentation de la séquence vidéo (231) et forme les entrées de la troisième couche (230).

Dans certains modes de réalisation, le dispositif (2) comprend en outre un module de notification apte à envoyer un message d'alerte à un dispositif récepteur (3) d'information.

Dans certains modes de réalisation, le programme du dispositif (2), lors de la détection d'une situation de noyade ou à risque de noyade exécute un code permettant de calculer et indiquer la localisation, par exemple la localisation GPS, de la situation détectée.

Cela est rendu possible par la calibration préalable des images vidéo fournies par la caméra par rapport aux données GPS associées. Par exemple, une matrice virtuelle de points GPS peut être superposée sur le champ de la caméra, qui sera déformé dû à l'angle de prise de vue. En fonction d'où sont détectés les vecteurs de représentation correspondant à une situation de noyade, le programme du dispositif (2) pourra indiquer la localisation GPS de ladite détection. Cela a pour avantage de permettre à l'utilisateur du dispositif (2) d'être rapidement informé d'où est situé l'événement. Dans certains modes de réalisation, lorsque la position de l'utilisateur est en outre connue, le dispositif (2) est configuré pour envoyer une notification à l'utilisateur le plus proche dudit événement.

Dans certains modes de réalisation, le programme du dispositif (2) est en outre configuré pour traiter l'image ou le flux d'image reçu pour produire une image augmentée ou un flux d'images augmentées, affichant par exemple une zone contenant la situation à risque. Cela permet avantageusement de fournir en sortie du dispositif (2), une image ou un flux d'images (flux vidéo) de la situation, sur laquelle des informations supplémentaires sont ajoutées par le programme, par exemple les coordonnées GPS, une mise en évidence de la zone ou est présent l'événement détecté, ou encore le type d'événement repéré ou la probabilité du risque de noyade. Cette image ou ce flux d'image peut ainsi être communiqué à l'utilisateur par exemple sur un dispositif récepteur (3) d'alerte et/ou d'affichage d'un utilisateur tel qu'une montre connectée comprenant un écran.

Les informations peuvent comprendre une image augmentée, une localisation, une alerte, ou tout autre information permettant d'aider un utilisateur, par exemple un sauveteur, à repérer, détecter, choisir, ou agir face à une situation détectée comme à risque.

Dans certains modes de réalisation, le dispositif (2) comprend en outre une base de données de séquences vidéo sur laquelle sont conservées les situations à risques détectées, le classificateur pouvant être entrainé par lesdites situations détectées. En d'autres termes, chacun des événements détectés sont enregistrés sur une base de données du dispositif (2), le classificateur du réseau neuronal artificiel (20) disposant d'un accès à cette base de données afin de prendre en compte lesdits événements détectés et s'améliorer. Ainsi, le dispositif (2), capable d'apprentissage automatique, peut s'améliorer au fil du temps grâce aux événements détectés et enregistrés. Dans certains modes de réalisation, le dispositif (2), ou la base de données du dispositif (2), peut être connecté à la base de données de séquences vidéo d'autres dispositif (2)s semblables, pour former un réseau de base de données de séquences vidéo, les images enregistrées de chaque événement repéré par chaque dispositif (2) étant mises en commun entre chaque dispositif (2). Cela a pour avantage de leur permettre de partager leur détection et de s'améliorer par le biais de l'entrainement de leur classificateur final.

Dans certains modes de réalisation, le dispositif (2) fait partie d'un système (1) de de surveillance et de détection de personnes en situation à risque de noyade ou de situation à risque de noyade, ledit système (1) comprenant en outre au moins un capteur d'image, préférentiellement un capteur d'images (4) et de de séquences vidéo, par exemple une caméra, le capteur étant configuré pour fournir des de séquences vidéo au programme du dispositif (2) de détection, et au moins un dispositif récepteur (3) d'information et/ou d'alerte, configuré pour informer un utilisateur de la détection d'une situation de noyade ou à risque de noyade, le dispositif (2) de détection étant configuré pour envoyer un message par un module de notification au dispositif (2) d'information lorsqu'une des de séquences vidéo fournies par le capteur d'images (4) est considérée correspondante à une situation de noyade ou à risque de noyade de sa base de données.

Cela permet avantageusement pour un utilisateur de repérer des situations à risques dans des zones (Z) difficiles d'accès ou compliquées à surveiller, par l'utilisation d'un système (1) de détection automatique à partir de caméras fournissant des données d'images (211) par exemple d'images aériennes, l'utilisateur étant informé par le dispositif (2) d'information lorsque celui-ci reçoit un message du module de notification du dispositif (2).

Le dispositif récepteur (3) d'information peut être un dispositif (2) portatif, par exemple une montre, ou peut être un tableau/panneau d'affichage alertant sur la situation.

Dans certains modes de réalisation, le capteur d'images (4) est monté sur un pylône relié audit dispositif (2) de détection. Les images aériennes permettent dans certains situations un repérage plus rapide des situations à risque, par rapport à des caméras au sol et/ou dans l'eau.

Dans certains modes de réalisation, le dispositif récepteur (3) d'information est configuré pour afficher des informations de localisation et/ou une image augmentée de la situation à risque, afin d'informer l'utilisateur par la fourniture de toutes les informations récupérées par le dispositif (2) de détection.

Dans certains modes de réalisation, le dispositif récepteur (3) d'information comprend une montre connectée exécutant une application configurée pour afficher les informations reçues par ledit dispositif (2) d'information, ainsi qu'une alerte sonore et/ou vibrante. Dans certains modes de réalisation non limitatifs, le dispositif (2) d'information comprend au moins un terminal de communication, par exemple un téléphone intelligent, une tablette ou un ordinateur, notamment portable. Ces modes de réalisation ne sont pas limitatifs et sont combinables. Ainsi, dans certains modes de réalisation, le système (1) comprend plusieurs dispositif (2)s d'information, par exemple une montre connectée permettant une réaction rapide de la part de l'utilisateur, et un terminal de communication dotée d'un écran plus important, par exemple un téléphone intelligent, une tablette ou un ordinateur apte à afficher toutes les informations dont dispose le dispositif (2) vis-à-vis de la situation.

Dans certains modes de réalisation, le procédé d'entrainement par transfert d'apprentissage d'un programme d'apprentissage automatique configuré pour la détection de personnes en situation de noyade ou à risque de noyade, le programme étant mémorisé dans au moins un média lisible et comprenant un réseau neuronal artificiel (20) présentant une architecture d'apprentissage automatique composée de plusieurs couches, le procédé comprenant au moins les étapes suivantes :
- Entrainement non spécifique du réseau neuronal artificiel (20) par la fourniture de données d'images (211) et de séquences vidéo standard, dans laquelle les données d'images et les séquences vidéo sont préalablement annotées et classées, puis
- Entrainement spécialisé du réseau neuronal artificiel (20) par la fourniture de séquences vidéo de situations de noyade ou à risque de noyade, simulées ou réelles.

Cela permet avantageusement de réduire grandement le besoin d'images pour la spécialisation du réseau neuronal. Ainsi le réseau neuronal est d'abord entrainé « en série » à reconnaître des formes, et à les classer, puis il est spécialisé dans la détection de situation à risque de noyade, et notamment la détection de situations dans lesquelles la noyade n'a pas encore eu lieu, c'est-à-dire où le corps n'est pas encore entièrement submergé. Cette spécialisation demande moins d'images car il ne s'agit que de reconnaitre spécifiquement certains motifs considérés comme amenant à une situation de noyade.

Dans certains modes de réalisation, le procédé d'entrainement par transfert d'apprentissage d'un programme d'apprentissage automatique configuré pour la détection de personnes en situation de noyade ou à risque de noyade, le programme étant mémorisé dans au moins un média lisible et comprenant un réseau neuronal artificiel (20) présentant une architecture d'apprentissage automatique composée de plusieurs couches, le procédé comprenant au moins les étapes suivantes :
- Entrainement d'une première couche (210) du programme comprenant un modèle de réseau
- réseau, préférentiellement de type réseau de neurones convolutifs, CNN, par la fourniture de données d'images (211) d'une base de données d'images standard, par exemple publique, dans laquelle les données d'image sont préalablement annotées et classées,
- Entrainement d'une deuxième couche (220) du programme comprenant un réseau récurrent, préférentiellement de type réseau récurrent à mémoire court et long terme, LSTM, par la fourniture de séquences vidéo d'une banque de données vidéos standard, préférentiellement publique, dans laquelle les séquences vidéo sont préalablement annotées et classées,
- Entrainement d'une troisième couche (230) du programme comprenant un classificateur final par la fourniture de données séquences vidéo de situations de noyade ou à risque de noyade, simulées ou réelles, les données vidéos ayant été choisies spécifiquement et annotés comme situations à risque de noyade, le classificateur ainsi entrainé étant configuré pour fournir en résultat une probabilité de détection (232) d'une situation à risque à partir de séquences vidéo.

Dans certains modes de réalisation, le procédé de détection et de surveillance de personnes en situation de noyade ou à risque de noyade, comprenant au moins un capteur d'images (4), un dispositif (2) de détection comprenant un programme de codes exécutables sur un ou plusieurs composants hardware de traitement tels qu'un microprocesseur, le programme étant mémorisé dans au moins un média lisible et comprenant un réseau neuronal artificiel (20) présentant une architecture d'apprentissage automatique, et un dispositif (2) d'information d'un utilisateur, le procédé comprenant au moins les étapes suivantes
- Pré-entrainement dudit programme par un procédé selon la revendication précédente ;
- Fourniture de données d'image par un capteur d'images (4) au dispositif (2) de détection ;
- Analyse en temps réel desdites données d'images par ledit réseau neuronal artificiel (20), et fourniture d'une probabilité de détection (232) d'une situation à risque ;
- Détection d'une situation à risque, lorsque ladite probabilité de détection (232) est supérieure à une valeur préalablement déterminée ;
- Envoi par le programme d'une notification comprenant des informations sur la situation à risque au dispositif (2) d'information, préférentiellement porté par l'utilisateur.

Dans certains modes de réalisation, le procédé comprend une étape de localisation de la situation à risque par le programme lorsque celui-ci détecte ladite situation à risque.

Dans certains modes de réalisation, le procédé comprend une étape d'enregistrement des séquences vidéo de la situation à risques détectée dans la base de données du dispositif (2), le procédé comprenant en outre une étape d'apprentissage automatique dans laquelle le réseau neuronal artificiel (20) s'entraine sur les nouvelles séquences vidéo enregistrées afin d'améliorer la détection de situations à risque.

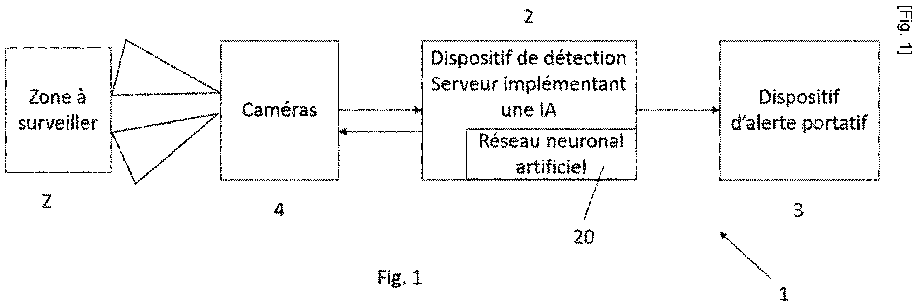

Dans certains modes de réalisation, comme par exemple illustré de manière non limitative à la figure 1, une zone de baignade, par exemple un bord de mer, constitue une zone à surveiller (Z). Un système (1) de détection est déployé afin de couvrir la zone. Des capteurs d'images, par exemple des caméras, sont installées, par exemple sur des pylônes pour fournir des données d'images avec une vue aérienne d'ensemble sur la zone (Z). Les capteurs d'images sont connectés, par un réseau filaire ou à distance, au dispositif (2) de détection, et fournissent au programme de détection lesdites données d'images. Le programme a préalablement été entrainé de manière non spécifique sur au moins une base de données d'images annotées diverses et sur au moins une base de données vidéos (flux d'images) annotés d'actions et d'activités humaines, puis est entrainé spécifiquement sur une base de données de vidéos de situations à risque de noyade. Le programme ainsi entrainé est configuré pour détecter une situation à risque de noyade, de préférence depuis une vue aérienne, et notamment avant que la personne ne coule. Lorsqu'il détecte une situation à risque de noyade, le dispositif (2) émet par son module de notification une notification vers un dispositif (2) d'information, par exemple portatif, tel qu'une montre, afin d'avertir un utilisateur, par exemple un sauveteur. La notification peut comprendre une alerte, une image augmentée, une localisation ou toute autre information susceptible d'aider le sauveteur pour accélérer sa prise de décision et le sauvetage de la personne. Dans certains modes de réalisation, le dispositif (2) est configuré pour enregistrer dans sa base de données les données d'images ayant permis une détection de noyade, le programme étant entrainé sur ces nouvelles données afin d'améliorer sa reconnaissance des situations à risques futures.

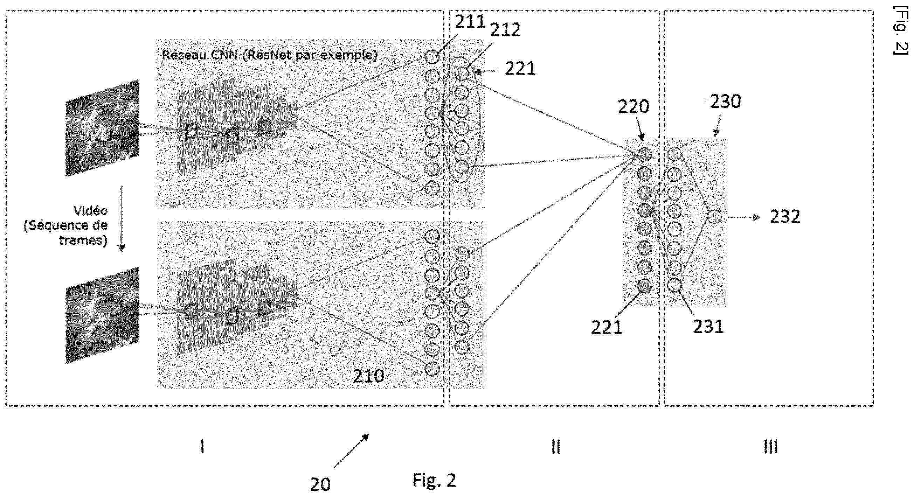

Plus particulièrement, la figure 2 illustre un exemple de mode de réalisation non limitatif de la présente invention, dans lequel le procédé d'entraînement d'un réseau neuronal artificiel (20) comprenant au moins trois couches différentes est décrit. La première couche (210) du réseau neuronal est formée par un réseau de neurones convolutifs (201), par exemple ResNet® ou Inception®, et est entrainé, durant une étape I, sur des données d'images (211) d'une base de données d'images standard, c'est-à-dire non spécifique dans leur contenu, et le plus souvent en libre accès, cette première base de données comprenant un très grand nombre d'images, quinze millions d'images par exemple, qui représente des choses très variées. Une deuxième couche (220) du réseau neuronal, formée par un réseau récurrent à mémoire court et long terme, est entrainé, durant une étape II, sur des données vidéos d'une base de données vidéo standard d'actions humaines, par exemple une base de données UCF101 ou HDMB comprenant des données vidéos de catégories d'actions réalisées par des humains. Enfin, la troisième couche (230) du réseau neuronal est formée d'un classificateur final, configuré pour classer les données d'images (211) entre celles qui représente une situation de risque de noyade ou de noyade, et les autres situations. Ce classificateur final est entrainé, durant une étape III, par un nombre de séquences vidéo plus restreint, par exemple quelques dizaines, qui représentent toutes différentes actions de noyade, réelles ou simulées. Avantageusement, l'utilisation de ces vidéos très spécifiques, permettent d'obtenir un réseau neuronal spécialisé dans la détection de situation à risque de noyade par la spécialisation de sa troisième couche (230), le classificateur final, à l'aide d'un faible nombre de vidéos spécifiques. Cela permet de réduire grandement le besoin en vidéos annotés manuellement par transfert d'apprentissage, en utilisant un petit nombre de vidéos spécifiques pour spécialiser un réseau neuronal artificiel (20) pré-entrainé sur un grand nombre de données d'images et vidéos non spécifiques.

Lors de la surveillance d'une zone par le dispositif (2), le réseau neuronal reçoit un flux vidéo sous forme de données d'images. La première couche (210) pré-entraînée du réseau neuronal (20) va réaliser un premier traitement des données d'images (211) et fournir en sortie des vecteurs de représentation latente (212). La seconde couche (220) utilise en entrée des séquences desdits vecteurs de représentation latente (221) et réalise un second traitement pour fournir en sortie un vecteur de représentation latente de la séquence vidéo (231) qui forme les données d'entrée du classificateur (230). Le classificateur, spécialisé pour détecter des situations à risques de noyade, traite les données reçues en entrée pour fournir en sortie une probabilité de détection (232) d'une situation à risque. En fonction de la probabilité, le dispositif (2) de détection est configuré pour déclencher ou non l'envoi d'une alerte, par exemple par un module de notification vers un dispositif (2) d'information. L'alerte peut alors contenir une simple notification de danger, une image augmentée mettant en évidence la zone dans laquelle a lieu la situation à risque, et/ou des coordonnées GPS ou d'autres informations susceptibles d'aider un utilisateur du dispositif (2), par exemple un sauveteur.

Dans certains modes de réalisation, il est possible de niveler l'alerte en fonction de la valeur de la probabilité de détection (232) d'une situation à risque. Ainsi, si une première séquence vidéo donne une probabilité de détection (232) de 50%, une alerte de faible niveau peut être envoyée. En fonction de la probabilité de détection (232) des séquences de vidéos suivantes, le niveau de l'alerte peut augmenter, ou l'alerte peut à l'inverse être stoppée.

**On** comprendra aisément à la lecture de la présente demande que les particularités de la présente invention, comme généralement décrits et illustrés dans les figures, puissent être arrangés et conçus selon une grande variété de configurations différentes. Ainsi, la description de la présente invention et les figures afférentes ne sont pas prévues pour limiter la portée de l'invention mais représentent simplement des modes de réalisation choisis.

L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

### LISTE DES SIGNES DE REFERENCE

1. Système de détection
2. Dispositif de détection
3. Dispositif récepteur
4. Capteur d'image
20. Réseau neuronal artificiel
210. Première couche, réseau CNN
211. Données d'images
212. Vecteur de représentation latente
220. Deuxième couche, réseau récurrent LSTM
221. Entrée : Séquence de vecteur de représentation latente
230. Troisième couche, classificateur final
231. Entrée : Vecteur de représentation de la séquence vidéo
232. Sortie : Probabilité de détection
Z. Zone à surveiller

## Revendications

1. Dispositif (2) de détection de personnes en situation de noyade ou de situation à risque de noyade, comprenant au moins un programme de codes exécutables sur un ou plusieurs composants hardware de traitement tels qu'un microprocesseur, le programme étant mémorisé dans au moins un média lisible et implémentant un réseau neuronal artificiel (20) présentant une architecture d'apprentissage automatique composée de plusieurs couches, le réseau neuronal artificiel (20) étant **caractérisé en ce qu'**il comprend :
- Une première couche (210) comprenant un modèle de réseau, préférentiellement de type réseau de neurones convolutifs, CNN, pré-entrainé sur des données d'images d'une base de données d'images standard, et préférentiellement publique, les données d'images étant annotées et classées,
- Une deuxième couche (220) comprenant un réseau récurrent, préférentiellement de type réseau récurrent à mémoire court et long terme, LSTM, pré-entrainé sur des séquences vidéo d'une base de données vidéos standard, les séquences vidéo étant annotées et classées,
- Une troisième couche (230) comprenant un classificateur final entrainé sur des séquences vidéo d'une base de données spécifique de vidéos comportant des situations de noyade ou à risque de noyade, simulées ou réelles, les séquences vidéo étant annotées et classées, le classificateur étant configuré pour fournir en résultat une probabilité de détection (232) d'une situation à risque à partir de séquences vidéo,
Le programme étant configuré pour utiliser les probabilités pour repérer dans des séquences vidéo d'un flux vidéo fourni, de préférence par des capteurs, notamment une caméra, et préférentiellement en temps réel, des situations de noyade ou à risque de noyade.

2. Dispositif (2) de détection de personnes en situation de noyade ou de situation à risque de noyade selon l'une des revendications précédentes, dans lequel les valeurs de sortie de la première couche (210) sont composées de vecteur de représentation latente (212) des données d'images (211) et sont combinées pour former des séquences de vecteurs de représentation latente (221) comme valeurs d'entrée de la deuxième couche (220).

3. Dispositif (2) de détection de personnes en situation de noyade ou de situation à risque de noyade selon l'une des revendications précédentes, dans lequel les sorties de la deuxième couche (220) forment un vecteur de représentation de la séquence vidéo (231), fourni en entrée de la troisième couche (230).

4. Dispositif (2) de détection selon l'une des revendications précédentes, qui comprend en outre un module de notification apte à envoyer un message d'alerte à un dispositif récepteur (3) d'information.

5. Dispositif (2) de détection de personnes en situation de noyade ou de situation à risque de noyade selon l'une des revendications précédentes, dans lequel le programme, lors de la détection d'une situation de noyade ou à risque de noyade, exécute un code permettant de calculer et indiquer la localisation, par exemple la localisation GPS, de la situation détectée.

6. Dispositif (2) de détection de personnes en situation de noyade ou de situation à risque de noyade selon l'une des revendications précédentes, dans lequel le programme est en outre configuré pour traiter l'image ou le flux d'image reçu pour produire une image augmentée ou un flux d'images augmentées, affichant par exemple une zone contenant la situation à risque.

7. Dispositif (2) de détection de personnes en situation de noyade ou de situation à risque de noyade selon l'une des revendications précédentes, dans lequel le dispositif (2) comprend en outre une base de données de séquences vidéo sur laquelle sont conservées les situations à risques détectées, le classificateur pouvant être entrainé par lesdites situations détectées.

8. Dispositif (2) de détection de personnes en situation de noyade ou de situation à risque de noyade selon l'une des revendications précédentes, dans lequel le dispositif (2) peut communiquer avec un autre dispositif (2) de détection semblable pour mettre en commun les situations à risques détectées et conservées dans leur base de données de séquences vidéo afin d'améliorer leur classificateur.

9. Système (1) de surveillance et de détection de personnes en situation à risque de noyade ou de situation à risque de noyade, la détection étant réalisée par le dispositif (2) selon l'une quelconque des revendications précédentes, ledit système (1) comprenant en outre :
- au moins un capteur d'images (4), préférentiellement un capteur d'images (4) et de séquences vidéo d'un flux vidéo, le capteur étant configuré pour fournir des séquences vidéo au programme du dispositif (2) de détection,
- au moins un dispositif récepteur (3) d'information configuré pour informer un utilisateur de la détection d'une situation de noyade ou à risque de noyade, le dispositif (2) de détection étant configuré pour envoyer un message par un module de notification au dispositif (2) d'information lorsqu'une des séquences vidéo fournies par le capteur d'images (4) est considérée correspondante à une situation de noyade ou à risque de noyade de sa base de données.

10. Système (1) de surveillance et de détection selon la revendication précédente, dans lequel le capteur d'images (4) est monté sur un pylône relié audit dispositif (2) de détection

11. Système (1) de surveillance et de détection selon l'une des revendications 8 à 9 dans lequel le dispositif récepteur (3) d'information est configuré pour afficher des informations de localisation et/ou une image augmentée de la situation à risque.

12. Système (1) de surveillance et de détection selon l'une des revendications 8 à 10, dans lequel le dispositif récepteur (3) d'information comprend une montre connectée exécutant une application configurée pour afficher les informations reçues par ledit dispositif (2) d'information, ainsi qu'une alerte sonore et/ou vibrante.

13. Procédé d'entrainement par transfert d'apprentissage d'un programme d'apprentissage automatique configuré pour la détection de personnes en situation de noyade ou de situation à risque de noyade, le programme étant mémorisé dans au moins un média lisible et comprenant un réseau neuronal artificiel (20) présentant une architecture d'apprentissage automatique composée de plusieurs couches, le procédé étant **caractérisé en ce qu'**il comprend au moins les étapes suivantes :
- Entrainement d'une première couche (210) du programme comprenant un modèle de réseau, préférentiellement de type réseau de neurones convolutifs, CNN, par la fourniture de données d'images d'une base de données d'images standard, par exemple publique, dans laquelle les données d'image sont préalablement annotées et classées,
- Entrainement d'une deuxième couche (220) du programme comprenant un réseau récurrent, préférentiellement de type réseau récurrent à mémoire court et long terme, LSTM, par la fourniture de séquences vidéo d'une banque de données vidéos standard, préférentiellement publique, dans laquelle les séquences vidéo sont préalablement annotées et classées,
- Entrainement d'une troisième couche (230) du programme comprenant un classificateur final par la fourniture de données séquences vidéo de situations de noyade ou à risque de noyade, simulées ou réelles, les données vidéos ayant été choisies spécifiquement et annotés comme situations à risque de noyade, le classificateur ainsi entrainé étant configuré pour fournir en résultat une probabilité de détection (232) d'une situation à risque à partir de séquences vidéo.

14. Procédé de détection et de surveillance de personnes en situation de noyade ou à risque de noyade, comprenant au moins un capteur d'images (4), un dispositif (2) de détection comprenant un programme de codes exécutables sur un ou plusieurs composants hardware de traitement tels qu'un microprocesseur, le programme étant mémorisé dans au moins un média lisible et comprenant un réseau neuronal artificiel (20) présentant une architecture d'apprentissage automatique, et un dispositif (2) d'information d'un utilisateur, le procédé comprenant au moins les étapes suivantes :
- Pré-entrainement dudit programme par un procédé selon la revendication précédente ;
- Fourniture de données d'image par un capteur d'images (4) au dispositif (2) de détection ;
- Analyse en temps réel desdites données d'images par ledit réseau neuronal artificiel (20), et fourniture d'une probabilité de détection (232) d'une situation à risque ;
- Détection d'une situation à risque, lorsque ladite probabilité de détection (232) est supérieure à une valeur préalablement déterminée ;
- Envoi par le programme d'une notification comprenant des informations sur la situation à risque au dispositif (2) d'information, préférentiellement porté par l'utilisateur.

15. Procédé selon la revendication précédente, dans lequel il comprend en outre une étape de localisation de la situation à risque par le programme lorsque celui-ci détecte ladite situation à risque.

16. Procédé selon la revendication précédente, dans lequel il comprend une étape d'enregistrement des séquences vidéo de la situation à risques détectée dans la base de données du dispositif (2), le procédé comprenant en outre une étape d'apprentissage automatique dans laquelle le réseau neuronal artificiel (20) s'entraine sur les nouvelles séquences vidéo enregistrées afin d'améliorer la détection de situations à risque.
